# EUROPÄISCHE PATENTSCHRIFT

(11) **EP 2 441 360 B1**
(45) Veröffentlichungstag und Bekanntmachung des Hinweises auf die Patenterteilung: **04.03.2015**
(21) Anmeldenummer: 11007955.5
(22) Anmeldetag: 30.09.2011
(51) Int. Cl.: A47J 31/44

(54) **Elektrische Getränkezubereitungsmaschine**
Electric beverage preparation machine
Machine de préparation de boissons électrique

(30) Priorität: 12.10.2010 DE 102010038112
(43) Veröffentlichungstag der Anmeldung: 18.04.2012
(73) Patentinhaber: Severin Elektrogeräte GmbH, 59846 Sundern (DE)
(72) Erfinder: Krug, Jörg, 35239 Steffenberg (DE); Kroesen, Klaus, 46509 Xanten (DE); Voigt, Christian, 46509 Xanten (DE); Beule, Sebastian, 57392 Bad Fredeburg (DE)
(74) Vertreter: Köchling, Conrad-Joachim

(56) Entgegenhaltungen:
- EP-A1- 0 820 715
- EP-A1- 2 189 085
- EP-A1- 2 220 972
- DE-A1-102004 025 038

## Beschreibung

Die Erfindung betrifft eine elektrische Getränkezubereitungsmaschine zur Zubereitung von Kaffee, Espresso, Milchmischgetränken oder dergleichen Getränken, wobei die Maschine ein Auslassgehäuseteil aufweist, das einen Einlass für Kaffee, Frischluft und Heißdampf sowie Milch und Auslässe für einerseits Kaffee und andererseits Milch und Milchschaum hat.

Bei derartigen Getränkezubereitungsmaschinen ist die Reinigung des Getränkeauslaufs schwierig. Im Regelfall ist der Auslauf nur manuell äußerlich zu reinigen. Das Innere kann lediglich durch einen automatischen Spülvorgang der Maschine gespült werden. Das gleiche Problem besteht auch bei einer integrierten Vorrichtung zum Aufschäumen von Milch. Solche Milchaufschäumsysteme müssen aufwendig zerlegt und gereinigt werden, da ansonsten aufgrund verbleibender Milchreste und dergleichen eine Verkeimung möglich ist.

Aus der EP 0 820 715 A 1 ist eine Kaffeemaschine gattungsgemäßer Art bekannt. Hierbei ist ein relativ aufwendiger und komplizierter Aufbau realisiert. Es ist einerseits eine Kaffeeverteilkammer mit düsenartigem Auslauf, Deckel und Einstecköffnung für eine Kaffeezulaufdüse notwendig und andererseits ein Bestandteil, der eine Emulgierkammer für ein Luft/Milchgemisch bildet und weitere Möglichkeiten für den Anschluss und die Vermischung von Milch und Luft hat. Auch dieser Bestandteil weist zusätzlich eine Einsatzöffnung für eine Einspritzdüse für Dampf beziehungsweise Luft auf sowie eine Mischkammer, in die auch eine Milchmischeinrichtung einmündet. Diese Bestandteile sind ineinandergesteckt und werden dann dadurch zur Funktion ergänzt, dass die Kaffeeeinlassdüse und die Dampf/Lufteinspritzdüse in das komplettierte Teil eingesteckt werden. Dieser Aufbau ist nicht nur relativ kompliziert und daher fertigungstechnisch aufwendig, sondern diese Ausgestaltung ist auch in der Handhabung kompliziert.

Des Weiteren ist die Reinigung der Einzelbestandteile, soweit dies notwendig ist, aufwendig und kompliziert durchzuführen.

Ausgehend von diesem Stand der Technik liegt der Erfindung die Aufgabe zugrunde, eine Getränkezubereitungsmaschine gattungsgemäßer Art zu schaffen, bei der eine einfache Reinigung sowohl des Kaffeeauslasses als auch des Milchaufschäumsystems ermöglicht ist.

Zur Lösung dieser Aufgabe schlägt die Erfindung vor, dass im Auslassgehäuseteil eine Konnektorplatte fixiert ist, die Anschlüsse für den Kaffeeeinlass, den Dampfeinlass und den Lufteinlass aufweist, und von der der Kaffeeauslass abgeht, sowie ein Anschlussstutzen oder dergleichen Kupplungsteil, der oder das den Dampf- und Luftauslass aufweist und an das oder den eine Mischkammer mit Milchanschluss dicht ansteckbar oder lösbar befestigt ist, und dass ein abnehmbarer Auslauf mit dem Auslassgehäuseteil lösbar verbunden ist, an welchem die Mischkammer mit Milchanschluss lösbar gehalten ist und welches eine zu einem ersten Auslauf führende erste Kammer für den Durchfluss von Kaffee aufweist, in die der Kaffeeauslass einmündet, und eine zu einem zweiten Auslauf führende zweite Kammer für den Durchfluss des aus der Mischkammer abströmenden Milch- und/oder Milchschaumstromes aufweist.

Gemäß dieser Anordnung ist in einem Auslassgehäuseteil, welches auch bei einer Reinigung von weiteren Bestandteilen an der Getränkezubereitungsmaschine verbleibt, also mit deren Gehäuse fest verbunden bleibt oder einteiliger Bestandteil des Gehäuses ist, eine Konnektorplatte fixiert. Diese Konnektorplatte weist Anschlüsse für den Kaffeeeinlass, den Dampfeinlass und den Lufteinlass auf. Von der Konnektorplatte geht der Kaffeeauslass ab und auch ein Anschlussstutzen oder dergleichen Kupplungsteil, der oder das den Dampf- und Luftauslass aufweist und an das oder den eine Mischkammer mit Milchanschluss dicht ansteckbar oder lösbar befestigt ist. Von der Mischkammer geht der Auslass für Milch oder Milchschaum ab. Zum Zwecke der Reinigung kann der Benutzer die Mischkammer in einfacher Weise entnehmen, wenn diese gereinigt werden soll. Dazu wird die Mischkammer von dem Anschlussstutzen oder dem Kupplungsteil abgezogen und kann dann separat gereinigt und gewartet werden.

Der abnehmbare Auslauf kann zum Zwecke der Reinigung leicht von dem Auslassgehäuseteil gelöst werden. An diesem abnehmbaren Auslauf ist die Mischkammer mit Milchanschluss wiederum lösbar gehalten. Ferner weist dieses Auslassgehäuseteil eine zu einem ersten Auslauf führende erste Kammer auf, die für den Durchfluss von Kaffee bestimmt ist, sowie eine zu einem zweiten Auslauf führende zweite Kammer, die für den Durchfluss von aus der Mischkammer abströmende Milch und/oder Milchschaum bestimmt ist. Zum Zwecke der Reinigung kann dieser abnehmbare Auslauf von dem Auslassgehäuseteil gelöst werden, so dass dann sämtliche von Kaffee, Milch und/oder Mischflüssigkeit durchströmte Bestandteile gut zugänglich sind und separat gereinigt werden können, beispielsweise auch in einem Geschirrspülautomat.

Bevorzugt ist dabei vorgesehen, dass die Konnektorplatte eine mit dem Anschluss für den Dampfeinlass verbundene, in die Mischkammer zielende erste Düse aufweist.

Diese lediglich für den Dampfdurchlass notwendige Düse ist Bestandteil der Konnektorplatte, da diese Düse üblicherweise bei der bestimmungsgemäßen Benutzung nicht verschmutzt, so dass eine zusätzliche Reinigung nicht erforderlich ist.
Bevorzugt ist dabei vorgesehen, dass die Mischkammer mit einer Einlassöffnung auf die erste Düse aufsteckbar ist und eine zweite Düse aufweist, in die das Gemisch aus Dampf, Luft und Milch einströmt und von der das Gemisch in die zweite Kammer geführt ist, wobei die Mischkammer zwischen der Einlassöffnung und der zweiten Düse einen seitlichen Milchzufuhranschluss aufweist.
Gemäß dieser Anordnung ist die Mischkammer mit einer entsprechenden Einlassöffnung auf die erste Düse aufsteckbar. Eine zweite Düse ist in Strömungsrichtung der ersten Düse nachgeordnet, in welche das Gemisch aus Dampf, Luft und Milch einströmt und von der das Gemisch in die zweite Kammer geführt wird. Zum Zuführen von Milch ist dabei zwischen der Einlassöffnung und der zweiten Düse an der Mischkammer ein seitlicher Milchzufuhranschluss vorgesehen.

Zusätzlich ist dabei vorgesehen, dass die Konnektorplatte von einem Luftkanal durchsetzt ist, der ausgangsseitig neben der ersten Düse in die Mischkammer einmündet.
Dieser Luftkanal, der zur zusätzlichen Zuführung von Luft zum Zwecke der Schaumbildung angeordnet ist, wird ebenfalls bei der bestimmungsgemäßen Benutzung regelmäßig nicht verschmutzt, so dass der Luftkanal mit der Konnektorplatte unlösbar verbunden bleiben kann. Durch die entsprechende Anordnung der Mündung des Luftkanales und der ersten Düse wird eine Vermischung von Dampf, zusätzlicher Luft und auch Milch in der Mischkammer ermöglicht.
Zur erleichterten Handhabung ist zudem vorgesehen, dass der Auslaufgehäuseteil mit dem Auslassgehäuse verrastbar ist, wobei an einem in Montagesolllage aus dem Auslassgehäuseteil herausragenden Endteil des Auslaufs Handhabungsmittel zum erleichterten Entrasten vorgesehen sind.
Um bei unterschiedlichen Tassenhöhen eine Anpassung des Auslaufs an das entsprechende Gefäß zu ermöglichen, ist zudem vorgesehen, dass das Auslassgehäuseteil an oder in einem weiteren ein- oder mehrteiligen Gehäuseteil höhenverstellbar gehalten ist.

Ein Ausführungsbeispiel der Erfindung ist in der Zeichnung dargestellt und im Folgenden näher beschrieben. Es zeigt:
- Figur 1: eine erfindungsgemäße Getränkezubereitungsmaschine In Ansicht;
- Figur 2: eine Explosionsdarstellung von erfindungswesentlichen Details der Maschine;
- Figur 3: eine Einzelheit von unten gesehen;
- Figur 4: die Einzelheit in Seitenansicht im Längsschnitt gesehen;
- Figur 5: die Einzelheit im Schnitt in Einem weiteren Teilbereich gesehen;
- Figur 6: die Einzelheit in einer Demontagelage, geschnitten gesehen;
- Figur 7: eine weitere Einzelheit in Explosionsdarstellung.

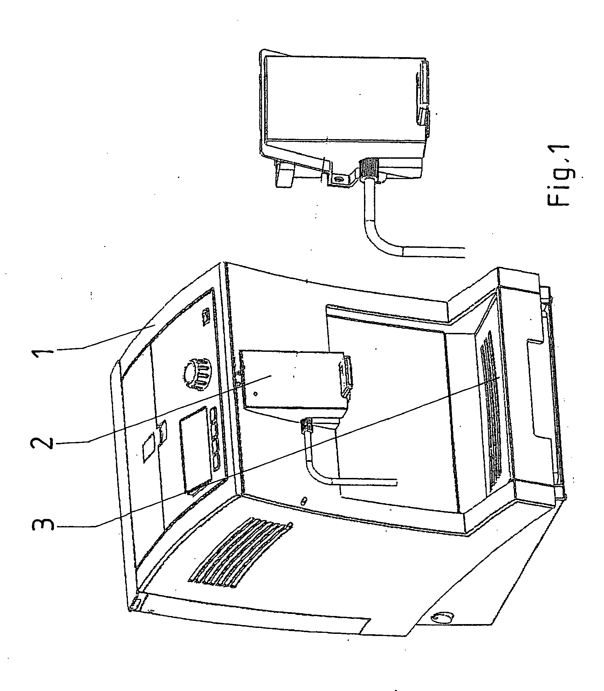

In Figur 1 ist eine elektrische Getränkezubereitungsmaschine in Form eines Kaffeeautomaten gezeigt, der zur Zubereitung von Kaffee, Espresso, Milchmischgetränken und dergleichen geeignet und bestimmt ist. Die Maschine 1 weist alle notwendigen Bestandteile zur Zubereitung entsprechender Getränke auf. Im vorderen Bereich weist die Maschine 1 ein Auslassgehäuseteil 2 auf, welches fest mit der Maschine 1 verbunden ist und in Figur 1 neben der Maschine 1 nochmals in Einzeldarstellung gezeigt ist. Wie später noch näher erläutert wird, weist das Auslassgehäuseteil 2 in seinem Inneren einen Einlass für Kaffee, Frischluft und Heißdampf sowie Milch auf und es weist zwei Auslässe für einerseits Kaffee und andererseits Milch oder Milchschaum an seiner Unterseite auf. Im unteren Bereich der Maschine 1 ist eine Aufstandsfläche 3 gezeigt, auf der eine Tasse oder dergleichen Behälter abgestellt werden kann, in welche das jeweilige Getränk abgegeben wird.

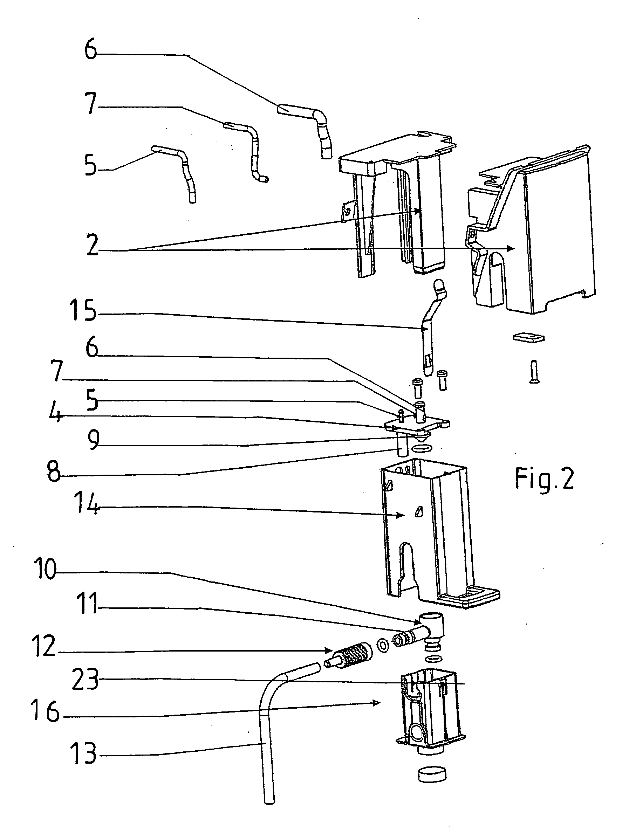

Wie insbesondere in Figur 2 ersichtlich, ist im Auslassgehäuseteil 2 mittelbar über ein anderes Element eine Konnektorplatte 4 montiert. Diese Konnektorplatte weist einen Anschluss 5 für den Kaffeeeinlass, einen Einlass 6 für Heißdampf und einen Einlass 7 für Luftzufuhr auf. An diese Einlässe sind entsprechende Schläuche angeschlossen, wie in der Zeichnung oben gezeigt, die mit den gleichen Bezugszeichen versehen sind. Die entsprechenden Anschlüsse sind an der Oberseite der Konnektorplatte 4 in Form von Stutzen vorgesehen. An der Unterseite der Konnektorplatte 4 geht der Kaffeeauslass 8 ab sowie ein Anschlussstutzen 9 oder dergleichen Kupplungsteil, der oder das den Dampf- und Luftauslass aufweist und an das oder an den eine Mischkammer 10 mit Milchanschluss 11, 12, 13 angeschlossen ist. Die Mischkammer 10 ist auf den Anschlussstutzen 9 oder das entsprechende Kupplungsteil lösbar aufgesteckt. Im Auslassgehäuseteil 2 ist ein weiteres Auslassgehäuseteil 14 angeordnet, welches relativ zu dem maschinenfesten Auslassgehäuseteil 2 höhenverstellbar gehalten ist, vorzugsweise unter der Kraft einer Rastfeder 15.

Des Weiteren ist ein abnehmbarer Auslauf 16 in das weitere Auslassgehäuseteil 14 von unten eingesetzt und lösbar mit dem Teil verbunden.
Dieser abnehmbare Auslauf 16 hält die Mischkammer 10 mit Milchanschluss 11,12,13. Diese Mischkammer ist mit den dazugehörigen Teilen an dem abnehmbaren Auslauf 16 lösbar gehalten.

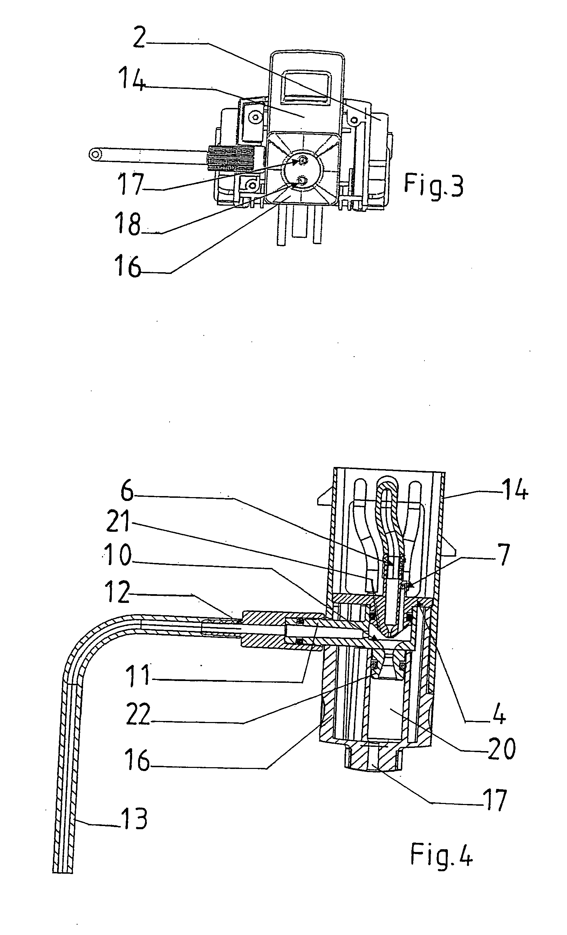

In Figur 3 ist das in Figur 1 rechts separate Element von unten gesehen dargestellt, wobei die beiden Auslauföffnungen 17,18 ersichtlich sind.

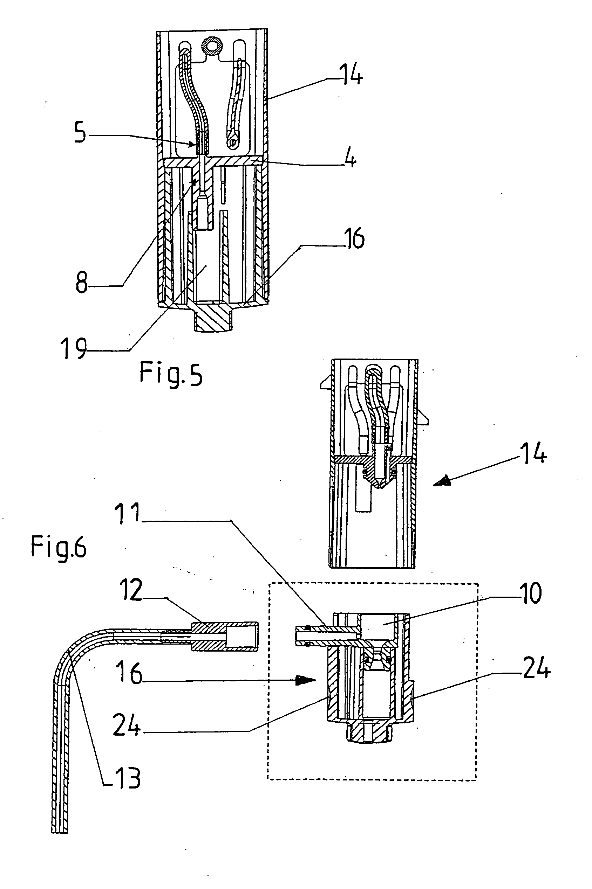

Die Figur 4 zeigt einen Schnitt durch das komplettierte Element und ebenso Figur 5. In Figur 5 ist das Auslassgehäuseteil 14 mit der Konnektorplatte 4 gezeigt, wobei auch der abnehmbare Auslauf 16 in Sollposition gezeigt ist. Es ist ersichtlich, dass eine zu dem ersten Auslauf 18 führende erste Kammer 19 für den Durchfluss von Kaffee vorgesehen ist, in die der Kaffeeablaufstutzen 8 einmündet.
In Figur 4 ist gezeigt, dass eine zu dem zweiten Auslauf 17 führende zweite Kammer 20 vorgesehen ist, die von der ersten Kammer 19 separiert ist. Die Kammer 20 dient zum Durchfluss des aus der Mischkammer 10 abströmenden Milch- und/oder Milchschaumstromes.
Wie insbesondere aus Figur 4 ersichtlich, weist die Konnektorplatte 4 eine erste, mit dem Anschluss 6 für den Dampfeinlass verbundene, in die Mischkammer 10 mündende Düse 21 auf. Die Mischkammer 10 ist mit einer Einlassöffnung auf diese erste Düse 21 dicht aufsteckbar (unter Anordnung von Dichtringen) und weist eine zweite Düse 22 auf, in die das Gemisch aus Dampf, Luft und Milch einströmt und von der das Gemisch in die zweite Kammer 20 geführt ist. Die Mischkammer 10 weist dabei zwischen der Einlassöffnung und der zweiten Düse 22 einen seitlichen Milchzufuhranschluss 11 auf.

Die Konnektorplatte 4 ist zusätzlich von dem Luftkanal 7 durchsetzt, der nach unten ausgangsseitig neben der ersten Düse 21 in die Mischkammer 10 einmündet.

Der abnehmbare Auslauf 16 ist mit dem Auslassgehäuseteil 14 verrastbar. Dazu weist der Auslauf 16 Rastnasen 23 und das Auslassgehäuseteil 14 entsprechende Rastausnehmungen auf. An dem in Montagesolllage aus dem Auslassehäuseteil 14 herausragenden Endbereich des Auslaufes 16 sind Handhabungsmittel 24 vorgesehen, die es dem Benutzer erleichtern, den Auslauf 16 zu ergreifen und aus dem Auslassgehäuseteil 14 zu entrasten und herauszuziehen.

In der Figur 6 ist gezeigt, wie der Auslauf 16 aus dem Auslassgehäuseteil 14 entnommen ist und ebenso der Anschluss 12, 13 von der Mischkammer 10 beziehungsweise dem Stutzen 11 abgezogen ist.

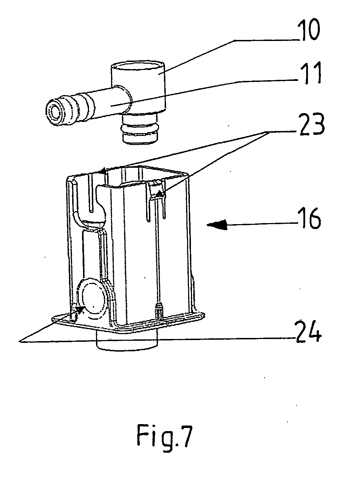

In Figur 7 ist gezeigt, wie die Mischkammer 10 von dem Auslauf 16 zum Zwecke der Reinigung gelöst ist.

Es ist somit gut erkennbar, dass die Einzelteile, die besonders zur Verschmutzung neigen, leicht von der Maschine 1 zu entnehmen sind, leicht zu zerlegen sind und einfach zu reinigen sind, beispielsweise in einer Spülmaschine. Auch das Zusammensetzen der Teile ist analog sehr einfach durchzuführen.

Die Erfindung ist nicht auf das Ausführungsbeispiel beschränkt, sondern im Rahmen der Offenbarung vielfach variabel.

## Patentansprüche

1. Elektrische Getränkezubereitungsmaschine zur Zubereitung von Kaffee, Espresso, Milchmischgetränken oder dergleichen Getränken, wobei die Maschine (1) ein Auslassgehäuseteil aufweist, das einen Einlass für Kaffee, Frischluft und Heißdampf sowie Milch und Auslässe für einerseits Kaffee und andererseits Milch und Milchschaum hat, wobei im Auslassgehäuseteil (14) eine Konnektorplatte (4) fixiert ist, die Anschlüsse (5,6,7) für den Kaffeeeinlass, den Dampfeinlass und den Lufteinlass aufweist, und von der der Kaffeeauslass (8) abgeht, sowie ein Anschlussstutzen (9) oder dergleichen Kupplungsteil, der oder das den Dampf- und Luftauslass aufweist und an das oder den eine Mischkammer (10) mit Milchanschluss (11) dicht ansteckbar oder lösbar befestigt ist, **dadurch gekennzeichnet, dass** ein abnehmbarer Auslauf (16) mit dem Auslassgehäuseteil (14) lösbar verbunden ist, an welchem die Mischkammer (10) mit Milchanschluss (11) lösbar gehalten ist und welches eine zu einem ersten Auslauf (18) führende erste Kammer (19) für den Durchfluss von Kaffee aufweist, in die der Kaffeeauslass (8) einmündet, und eine zu einem zweiten Auslauf (17) führende zweite Kammer (20) für den Durchfluss des aus der Mischkammer (10) abströmenden Milch- und/oder Milchschaumstromes aufweist.

2. Getränkezubereitungsmaschine nach Anspruch 1, **dadurch gekennzeichnet, dass** die Konnektorplatte (4) eine mit dem Anschluss (6) für den Dampfeinlass verbundene, in die Mischkammer (10) zielende erste Düse (21) aufweist.

3. Getränkezubereitungsmaschine nach Anspruch 2, **dadurch gekennzeichnet, dass** die Mischkammer (10) mit einer Einlassöffnung auf die erste Düse (21) aufsteckbar ist und eine zweite Düse (22) aufweist, in die das Gemisch aus Dampf, Luft und Milch einströmt und von der das Gemisch in die zweite Kammer (20) geführt ist, wobei die Mischkammer (10) zwischen der Einlassöffnung und der zweiten Düse (22) einen seitlichen Milchzufuhranschluss (11) aufweist.

4. Getränkezubereitungsmaschine nach einem der Ansprüche 1 bis 3, **dadurch gekennzeichnet, dass** die Konnektorplatte (4) von einem Luftkanal (7) durchsetzt ist, der ausgangsseitig neben der ersten Düse (21) in die Mischkammer (10) einmündet.

5. Getränkezubereitungsmaschine nach einem der Ansprüche 2 bis 4, **dadurch gekennzeichnet, dass** der Auslauf (16) mit dem Auslassgehäuseteil (14) verrastbar ist, wobei an einem in Montagesolllage aus dem Auslassgehäuseteil (14) herausragenden Endteil des Auslaufs (16) Handhabungsmittel (24) zum erleichterten Entrasten vorgesehen sind.

6. Getränkezubereitungsmaschine nach einem der Ansprüche 1 bis 5, **dadurch gekennzeichnet, dass** das Auslassgehäuseteil (14) an oder in einem weiteren ein- oder mehrteiligen Gehäuseteil (2) höhenverstellbar gehalten ist.

## Claims

1. An electric beverage preparation machine, in particular for the preparation of coffee, espresso, mixed milk drinks or the like, the machine (1) having an outlet housing portion with an inlet for coffee, fresh air and superheated steam and milk and outlets for, on the one hand, coffee and, on the other hand, milk and milk foam, in the outlet housing portion (14) a connector plate (4) being fixed and having ports (5, 6, 7) for the coffee inlet, the steam inlet, and the air inlet, and a coffee outlet (8) extending therefrom, and a connecting piece (9) or similar coupling portion comprising the steam outlet and the air outlet and at which a mixing chamber (10) with a milk connection piece (11) is tightly attachable or removably fixed, **characterized in that** a removable spout (16) is releasably connected to the outlet housing portion (14), at which the mixing chamber (10) with the milk connection piece (11) is releasably held, and which includes a first chamber (19) for the flow of coffee leading to a first outlet (18), in which first chamber (19) the coffee outlet (8) debouches, and includes a second chamber (20) leading to a second outlet (17) for the flow of the milk and/or milk foam flowing out of the mixing chamber (10).

2. The beverage preparation machine according to claim 1, **characterized in that** the connector plate (4) includes a first nozzle (21) connected to the port (6) for the steam inlet and aiming into the mixing chamber (10).

3. The beverage preparation machine according to claim 2, **characterized in that** the mixing chamber (10) can be plugged, with an inlet opening, onto the first nozzle (21) and includes a second nozzle (22), into which the mixture of steam, air, and milk flows and from which the mixture is guided into the second chamber (20), the mixing chamber (10) including a lateral milk supply port (11) between the inlet opening and the second nozzle (22).

4. The beverage preparation machine according to one of claims 1 to 3, **characterized in that** the connector plate (4) is passed by an air duct (7) debouching on the outlet side in the mixing chamber (10) beside the first nozzle (21).

5. The beverage preparation machine according to one of claims 2 to 4, **characterized in that** the spout (16) can be locked on the outlet housing portion (14), with handling means (24) for facilitating unlocking being provided at an end portion of the spout (16) projecting, in the desired mounting position, from the outlet housing portion (14).

6. The beverage preparation machine according to one of claims 1 to 5, **characterized in that** the outlet housing portion (14) is held at or in a further single or multi-piece housing portion (2) in a height-adjustable manner.

## Revendications

1. Machine de préparation de boissons électrique, en particulier de préparation de café, expresso, milk-shakes ou semblables, la machine (1) ayant une partie de boîtier de sortie avec une entrée pour le café, l'air fraîche et la vapeur chaude et le lait et des sorties pour, à l'un côté, le café et, à l'autre côté, le lait et la mousse de lait, dans la partie de boîtier de sortie (14) un plateau de connecteur (4) étant fixé et ayant des raccords (5, 6, 7) pour l'entrée de café, l'entrée de vapeur et l'entrée d'air, et la sortie de café (8) s'étendant à partir de celui-ci, et un raccord (9) ou pièce de couplage similaire comportant la sortie de vapeur et la sortie d'air et auquel ou auquelle une chambre de mixage (10) avec un raccord de lait (11) étant enfichable à étanchéité ou fixable de façon amovible, **caractérisée en ce qu'**une sortie détachable (16) est liée de façon amovible à la partie de boîtier de sortie (14), à laquelle la chambre de mixage (10) avec le raccord de lait (11) est maintenue de façon amovible, et qui comporte une première chambre (19) menant à une première sortie (18) pour l'écoulement de café, la sortie de café (8) débouchant dans cette première chambre, et comporte une deuxième chambre (20) menant à une deuxième sortie (17) pour l'écoulement du lait et/ou de la mousse de lait sortant de la chambre de mixage (10).

2. Machine de préparation de boissons selon la revendication 1, **caractérisée en ce que** le plateau de connecteur (4) comporte une première buse (21) liée au raccord (6) pour l'entrée de vapeur et étant dirigée vers l'intérieur de la chambre de mixage (10).

3. Machine de préparation de boissons selon la revendication 2, **caractérisée en ce que** la chambre de mixage (10) est enfichable, avec une ouverture d'entrée, sur la première buse (21) et comporte une deuxième buse (22), dans laquelle le mélange de vapeur, d'air et de lait entre et à partir de laquelle le mélange est guidé dans la deuxième chambre (20), la chambre de mixage (10) comportant un raccord d'alimentation latéral (11) de lait entre l'ouverture d'entrée et la deuxième buse (22).

4. Machine de préparation de boissons selon une des revendications 1 à 3, **caractérisée en ce que** le plateau de connecteur (4) est percé d'un canal d'air (7) débouchant sur le côté de la sortie dans la chambre de mixage (10) à côté de la première buse (21).

5. Machine de préparation de boissons selon une des revendications 2 à 4, **caractérisée en ce que** la sortie (16) peut être verrouillée avec la partie de boîtier de sortie (14), avec des moyens de manutention (24) étant prévus à une partie d'extrémité de la sortie (16) étant en saillie de la partie de boîtier de sortie (14), dans la position de montage de consigne, pour faciliter le déverrouillage.

6. Machine de préparation de boissons selon une des revendications 1 à 5, **caractérisée en ce que** la partie de boîtier de sortie (14) est maintenue à ou dans une autre partie de boîtier (2) à une ou multiples pièces d'une façon réglable en hauteur.
